# EUROPEAN PATENT SPECIFICATION

(11) **EP 1 194 666 B1**
(45) Date of publication and mention of the grant of the patent: **10.08.2005**
(21) Application number: 00938930.5
(22) Date of filing: 15.06.2000
(51) Int. Cl.: E04G 21/32, A62B 35/04

(54) **LOW PROFILE ENERGY ABSORBING DEVICE**
ENERGIE-ABSORBIERENDE VORRICHTUNG MIT NIEDRIGER HÖHE
DISPOSITIF D'ABSORPTION D'ENERGIE A PROFIL BAS

(30) Priority: 21.06.1999 GB 9914383
(43) Date of publication of application: 10.04.2002
(73) Proprietor: Latchways PLC, Devizes, Wiltshire SN10 2JP (GB)
(72) Inventor: WOODLEY, Mark, Wiltshire SN10 (GB)
(74) Representative: Rees, Alexander Ellison
(86) International application number: PCT/GB2000/002344
(87) International publication number: WO 2000/079075

(56) References cited:
- WO-A-85/05395
- GB-A- 2 325 719
- GB-A- 2 330 169
- US-A- 5 343 975

## Description

The present invention relates to height safety systems and, in particular, to an energy absorbing device for use in supporting an elongate safety line such as a wire cable or the like which forms part of a height safety installation. Most particularly, the invention relates to an energy absorbing device for mounting on lightweight roof panels as part of a personnel fall arrest system.

Personnel fall arrest systems generally comprise an elongate safety element such as a rail or a stranded wire cable or cable network for linking a worker's personnel safety harness to a rigid structure such as a building. If a fall occurs, it is desirable to reduce the shock loading experienced when the fall is arrested, primarily to reduce the severity of injury to the falling person, but also to minimise the forces applied to the elements of the fall arrest system and to the rigid building structure.

Further, personnel fall arrest systems generally include elements which should be replaced or inspected after a fall arrest event has occurred. Accordingly, it is desirable to provide a clear, permanent, visual indication that a fall arrest has occurred.

An energy absorbing device is known from the present Applicants' British Patent No. GB 2 325 719. The device disclosed in this earlier document is typically comprised of a pair of base members and a pair of arm elements. The base members are substantially planar strips of stainless steel, each 60 mm wide, 3 mm thick and 300 mm long. The two base members are secured together at their mid points in a cruciform configuration by a bolt. Each arm element is formed as an "A" frame by bending a strip of stainless steel 50 mm wide and 3 mm thick to define a symmetrical truncated triangle shape having two planar arm elements, each 300 mm in length.

One of the problems of the known energy absorbing device is that it stands nearly 300 mm tall and is regarded by some as unsightly. Another problem of the known energy absorbing device, also related to its height, is that the elongate safety line which it supports is suspended about 300 mm above the working surface of the fixed structure to which the energy absorbing device is attached. In some circumstances, this can be an awkward height because it means that the elongate safety element is too low down to serve as a useful hand rail substitute, but is too high to be conveniently stepped over. Thus, it may contribute to the fall hazard.

It is therefore an object of the present invention to provide an energy absorbing device which will overcome these problems. The device should be low profile in appearance and capable of absorbing shock loading by undergoing plastic deformation prior to the occurrence of any buckling in the roof panelling to which it is attached. It is also an object of the present invention to provide an energy absorbing device having omnidirectional shock-absorbing capability and which gives a clear visual indication when it has been subjected to a high load such as might be encountered in a fall arrest situation.

The invention is an energy absorbing device comprising a central body portion and at least three legs extending outwardly from said body portion, each of said legs having a first and a second end, the first ends of said legs being linked together and to said body portion to define support means adapted to support a length of an elongate safety line, characterized in that the second end of each of said legs being attached to a separate foot member, each foot member including respective separate attachment means able to attach the device to a support structure, and in that each said foot member being capable of undergoing permanent plastic deformation in response to sudden shock loading transmitted through said elongate safety line, whereby said permanent plastic deformation is effective to absorb at least a part of the energy of said sudden shock loading.

Preferably, there are four legs arranged in orthogonal pairs about the body portion and the body portion may have a raised central part constituting the support means. The support means may include an anchor element which may be in the form of a D-ring suitable for supporting flexible cables. The D-ring may, of course, be replaced by other suitable anchor element as required.

The invention will now be described, by way of example only, with reference to the drawings, in which:
- Figure 1: is a top plan view of a first embodiment of an energy absorbing device according to the invention,
- Figure 2: shows a partial side sectional view of the energy absorbing device of Figure 1.
- Figure 3: is a top plan view of a second embodiment of an energy absorbing advice according to the invention, and
- Figure 4: shows a partial side view of the energy absorbing device of Figure 3.

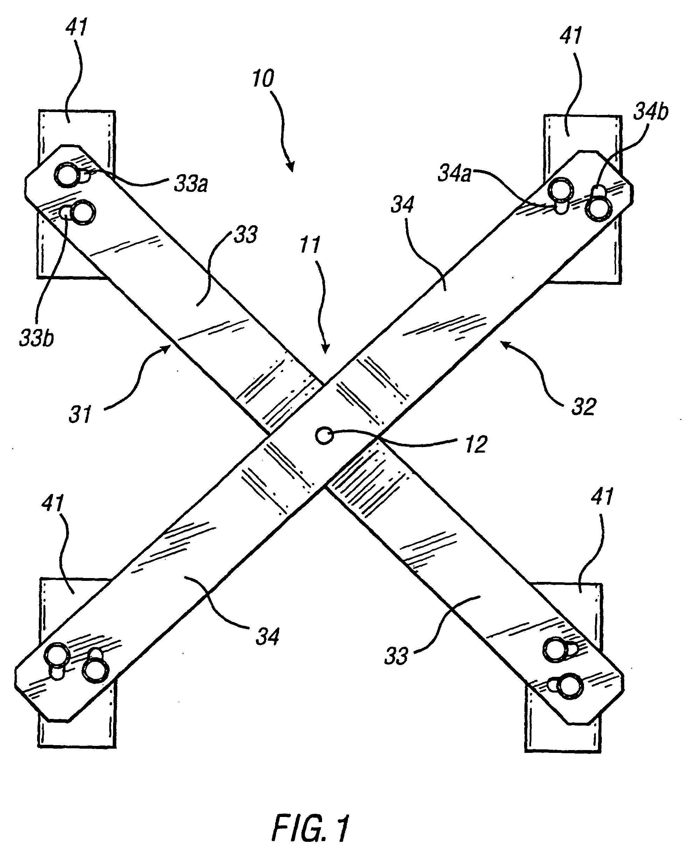

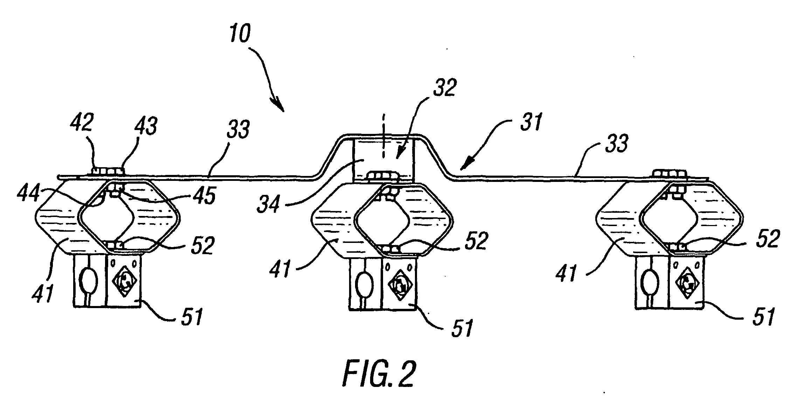

Referring to Figures 1 and 2, a first embodiment of an energy absorbing device 10 is shown. The device is formed by two pairs of leg elements 33, 34 which, in the illustrated first embodiment, are formed from two unitary straps 31, 32 of type 316 stainless steel bent to shape with a raised central portion. Typically, the stainless steel straps are 60 mm wide and 3 mm thick. The raised central portion is designated as body portion 11 and includes means, in the form of a through- hole 12 which passes through both straps 31, 32, for attachment of an anchor element (not shown) for supporting an elongate safety line. Typically, the elongate safety line will be a multiple strand metal cable of 8 mm diameter and the anchor element may be in the form of a D-ring suitably dimensioned to receive the cable through the eye of the ring. The D-ring may, of course, be replaced by any other suitable anchor element, according to requirements.

In the first embodiment, the ends of the legs 33, 34 remote from body portion 11 are formed with slots 33a, 33b and 34a, 34b that are oriented diagonally with respect to the longitudinal axes of the legs 33, 34. The purpose of these diagonal slots will be explained in more detail below with reference to Figure 2.

Figure 2 is a partial side sectional view of the energy absorbing device 10 depicted in top plan view in Figure 1. Strap 31 is shown in full side-on, whilst strap 32 is shown only in part, the portion visible being that portion which lies behind the plane of the page. A foot member 41 is attached by a pair of nuts 42, 43 and bolts 44, 45 at the end of each leg 33, 34 remote from body portion 11. As shown, each foot member 41 is itself attached by (threaded) fastening means 52 to a seam clamp 51 which is adapted, in use, to straddle the upstanding seam of a lightweight standing seam panel structure, such as a roof skin. By virtue of the diagonally-oriented slots 33a, 33b and 34a, 34b, the foot members 41 at the ends of legs 33, 34 can be aligned such that it is possible for them to be mounted on a common upstanding seam.

The foot members 41 depicted in Figure 2 are in the form of a loop of material bent into a hexagonal profile, with the ends of the loop overlapping each other at the bottom 46 of the foot member 41, adjacent the top surface of the seam clamp 51. The shape of the foot members 41 is chosen so that they are capable of undergoing permanent plastic deformation in response to sudden shock loading, such as might be experienced in a fall arrest situation if a person attached to the elongate safety line were to fall from height.

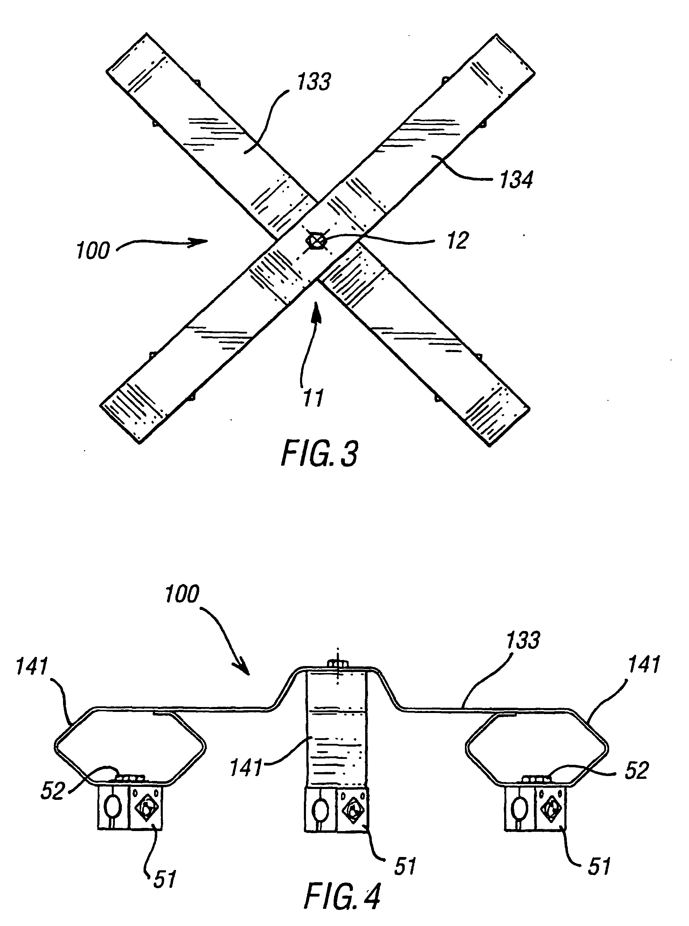

Referring to Figures 3 and 4, a second embodiment of an energy absorbing device 100 is shown. The device is formed by two pairs of leg elements 133,134 which are formed from unitary straps of stainless steel bent to shape with a raised central portion similarly to the first embodiment. The raised central portion of the device 100 forms a body portion 11 and includes means in the form of a through hole 12 for attachment of an anchor element (not shown) for supporting an elongate safety line similarly to the first embodiment.

In the second embodiment the ends of the legs 133,134 remote from the body portion 11 are bent around in respective loops and the free ends of each of the legs 133,134 welded back to the legs 133, 134 respectively.

The loops of material formed by the bending back of the ends of the legs 133,134 are bent into a hexagonal profile to define foot members 141.

As shown in Figure 4, each foot member 141 is itself attached by (threaded) fastening means 52 to a seam clamp 51 which is adapted, in use, to straddle the upstanding seam of a lightweight standing seam panel structure, such as a roof skin similarly to the arrangement in the first embodiment.

The shape of the foot members 141 of the second embodiment is the same as the foot members 41 of the first embodiment and is chosen so that the feet are capable of undergoing permanent plastic deformation in response to sudden shock loading, such as might be experienced in a fall arrest situation if a person attached to the elongate safety line were to fall from a height.

The use of welding to secure the free ends of the legs 133,134 to define the feet 141 is convenient, but other means of attachment could be used if desired.

Other shapes and configurations could be used for the foot members 41 or 141 instead of that described, provided that the capability for permanent plastic deformation is not compromised and provided that a minimum threshold loading can be resisted without resulting in deformation when circumstances do not warrant it.

In use, the energy absorbing device 10 or 100 transmits loads from the anchor element (not shown) to the rigid structure and for low loads acts as a substantially rigid unit. If a load of greater than 3.5 kN is applied to the anchor element approximately parallel to the legs 33, 34, the energy absorbing device 10 or 100 will distort due to plastic deformation of the foot members 41 or 141. This plastic deformation will start with collapse of the hexagonal loops and may involve a general slewing of the device 10 in the direction towards the source of the transmitted load.

In practice, it has been found with a loading of 8 kN parallel to the legs 33, 34 or 133,134, the energy absorbing device 10 or 100 distorts sufficiently to move the anchor element by about 40 mm sideways. Such a degree of distortion involves collapse of all four foot members 41 or 141 and will result in a considerable amount of energy absorption. This distortion of the energy absorbing device 10 or 100 and resulting absorption of energy applied to the energy absorbing device 10 or 100 reduces the instantaneous shock loads applied to the underlying support structure and the cable, or other arrangements, attached to the anchor element. Such instantaneous shock loads could damage or damage or distort the underlying support structure, the cable, or other features in the system. In particular, in a fall arrest system, such shock loading can injure the falling person.

Further, the distortion of the energy absorbing device 10 or 100 provides a clear, permanent, visual indication that a high load has been applied to the safety apparatus. This would not normally occur with a device incorporating resilient means, such as springs, as the energy absorbing means.

In a fall arrest system, a load of 3.5 kN or greater will normally only be applied to the system in the event that fall arrest has occurred. The distortion of the energy absorbing device 10 or 100 will act as a visual reminder to users to check and replace elements of the system as required.

A symmetrical arrangement of the legs 33, 34 or 133,134 about the body portion 11 ensures that the energy absorbing device 10 or 100 has an approximately omni-directionally constant response to loads. This approximately omnidirectionallly constant response to loads includes both the threshold level at which distortion and plastic deformation of the energy absorbing device 10 or 100 begins and the profile of load against time or load against distortion exhibited by the energy absorbing device 10 or 100 if a load above this level is applied.

Instead of integrally-formed pairs of legs 33, 34, or 133,134 the legs could be formed individually. Alternatively, all of the legs could be formed integrally, for example, by cutting or pressing from a sheet. Bolting is, of course, only one method of assembly and the elements could be secured together by any other convenient means such as welding. Similarly, the inclusion of bolt holes to facilitate attachment of the foot members 41 to the legs 33, 34 of the energy absorbing device 10 is not essential but is convenient.

In order to provide the symmetry of the legs, if desired, it is necessary that at least three legs are provided.

In the described examples, the foot members 41 or 141 are formed by bent strips having a uniform width and thickness. In order to provide a desired threshold value for deformation to begin, and to ensure the desired pattern of deformation against time, the foot members 41 or 141 could be given a variable width or thickness or could be provided with ribs or cutaways or any other strength varying feature.

Another possible variant is for the foot members to be formed integrally as an extension of the respective legs of the device.

A threshold for distortion of 3.5 kn is often desirable in fall arrest systems, but the energy absorbing device 10 or 100 can be arranged to have any desired threshold value by suitable dimensioning, shaping and/or choice of materials. The materials and dimensions described herein should therefore be regarded as merely illustrative. The energy absorbing device 10 or 100 of the invention can be made from a wide range of materials in any desired size suitable for the intended use.

Although the invention has been particularly described above with reference to specific embodiments, it will be understood by persons skilled in the art that this is merely illustrative and that variations are possible without departing from the scope of the claims which follow.

## Claims

1. An energy absorbing device (10;100) comprising a central body portion (11) and at least three legs (33, 34; 133, 134) extending outwardly from said body portion, each of said legs having a first and a second end, the first ends of said legs being linked together and to said body portion to define support means adapted to support a length of an elongate safety line, **characterized in that** the second end of each of said legs being attached to a separate foot member, (41; 141) each foot member including respective separate attachment means (51, 52) able to attach the device to a support structure, and **in that** each said separate foot member being capable of undergoing permanent plastic deformation in response to sudden shock loading transmitted through said elongate safety line, whereby said permanent plastic deformation is effective to absorb at least a part of the energy of said sudden shock loading.

2. An energy absorbing device as claimed in claim 1 wherein there are four legs arranged in orthogonal pairs about the body portion.

3. An energy absorbing device as claimed in claim 1 or claim 2 wherein the body portion has a raised central part constituting the support means.

4. An energy absorbing device as claimed in any preceding claim wherein the support means includes an anchor element for supporting said length of elongate safety line.

5. An energy absorbing device as claimed in any preceding claim wherein said foot members are in the form of a loop of material.

6. An energy absorbing device as claimed in any preceding claim wherein said foot members (141) are integrally formed with the ends of respective legs (113, 134) of the device.

7. An energy absorbing device as claimed in any preceding claim in which the legs are symmetrically arranged about an axis perpendicular to a plane of the support means.

8. An energy absorbing device as claimed in any preceding claim comprising two identical integral pairs of legs.

9. An energy absorbing device as claimed in any preceding claim in which each leg is formed from a single strip of material by bending.

10. An energy absorbing device as claimed in any preceding claim in which each leg is formed from a single strip of material.

## Patentansprüche

1. Energie absorbierendes Gerät (10;100) umfassend einen zentralen Körperteil (11) und mindestens drei Beine (33, 34; 133, 134), die sich von dem Körperteil nach außen erstrecken, wobei jedes der Beine ein erstes und ein zweites Ende aufweist, wobei die ersten Enden der Beine mit einander und dem Körperteil verbunden sind, um Stützvorrichtungen zu definieren, die geeignet sind, eine Länge einer längsgezogenen Sicherheitslinie zu stützen, **dadurch gekennzeichnet, dass** das zweite Ende jedes der Beine an einem getrennten Fußteil (41; 141) befestigt ist, wobei jedes Fußteil jeweilige getrennte Befestigungsvorrichtungen (51, 52) umfasst, die in der Lage sind, das Gerät an einer Stützstruktur zu befestigen, und **dadurch**, dass jedes getrennte Fußteil in der Lage ist, eine bleibende plastische Verformung als Reaktion auf eine plötzliche Schockbelastung hin durchzumachen, die durch die längsgezogene Sicherheitslinie übertragen wird, wobei die bleibende plastische Verformung wirksam ist, mindestens einen Teil der Energie der plötzlichen Schockbelastung zu absorbieren.

2. Energie absorbierendes Gerät nach Anspruch 1, wobei vier Beine in orthogonalen Paaren um den Körperteil angeordnet sind.

3. Energie absorbierendes Gerät nach Anspruch 1 oder Anspruch 2, wobei der Körperteil einen erhobenen zentralen Teil aufweist, der die Stützvorrichtung darstellt.

4. Energie absorbierendes Gerät nach einem der vorhergehenden Ansprüche, wobei die Stützvorrichtung ein Ankerelement zum Stützen der Länge der längsgezogenen Sicherheitslinie umfasst.

5. Energie absorbierendes Gerät nach einem der vorhergehenden Ansprüche, wobei die Fußteile in Form eines Schleifenmaterials vorliegen.

6. Energie absorbierendes Gerät nach einem der vorhergehenden Ansprüche, wobei die Fußteile (141) mit den Enden der jeweiligen Beine (113, 134) des Geräts integral gebildet sind.

7. Energie absorbierendes Gerät nach einem der vorhergehenden Ansprüche, wobei die Beine um eine Achse symmetrisch angeordnet sind, die senkrecht zu einer Ebene der Stützvorrichtung liegt.

8. Energie absorbierendes Gerät nach einem der vorhergehenden Ansprüche, umfassend zwei identische integrale Beinpaare.

9. Energie absorbierendes Gerät nach einem der vorhergehenden Ansprüche, wobei jedes Bein durch Biegen aus einem einzigen Streifen Material gebildet ist.

10. Energie absorbierendes Gerät nach einem der vorhergehenden Ansprüche, wobei jedes Bein aus einem einzigen Streifen Material gebildet ist.

## Revendications

1. Dispositif d'absorption d'énergie (10;100), comprenant une portion de corps centrale (11) et au moins trois jambes (33, 34; 133, 134) se prolongeant vers l'extérieur à partir de ladite portion de corps, chacune desdites jambes ayant une première et une deuxième extrémités, les premières extrémités desdites jambes étant reliées ensemble et à ladite portion de corps, pour définir des moyens de support adaptés au support d'une longueur d'une ligne de sécurité allongée, **caractérisé en ce que** la deuxième extrémité de chacune desdites jambes est attachée à un organe de pied séparé (41; 141), chaque organe de pied incluant un moyen d'attache séparé correspondant (51, 52), capable d'attacher le dispositif à une structure de support, et **en ce que** chaque dit organe de pied séparé est capable de subir une déformation plastique permanente en réaction à un charge soudaine par chocs, transmise par l'intermédiaire de ladite ligne de sécurité allongée, ladite déformation plastique permanente étant efficace pour absorber au moins une partie de l'énergie de ladite charge soudaine par chocs.

2. Dispositif d'absorption d'énergie selon la revendication 1, dans lequel il existe quatre jambes arrangées en paires orthogonales autour de la portion de corps.

3. Dispositif d'absorption d'énergie selon la revendication 1 ou 2, dans lequel la portion de corps a une partie centrale surélevée constituant le moyen de support.

4. Dispositif d'absorption d'énergie selon l'une quelconque des revendications précédentes, dans lequel le moyen de support comprend un élément d'ancrage pour le support de ladite longueur de ligne de sécurité allongée.

5. Dispositif d'absorption d'énergie selon l'une quelconque des revendications précédentes, dans lequel lesdits organes de pieds sont sous la forme d'une boucle de matériau.

6. Dispositif d'absorption d'énergie selon l'une quelconque des revendications précédentes, dans lequel lesdits organes de pied (141) sont formés d'un seul tenant avec les extrémités des jambes respectives (113, 134) du dispositif.

7. Dispositif d'absorption d'énergie selon l'une quelconque des revendications précédentes, dans lequel les jambes sont arrangées de manière symétrique autour d'un axe perpendiculaire à un plan du moyen de support.

8. Dispositif d'absorption d'énergie selon l'une quelconque des revendications précédentes, comprenant deux paires identiques de jambes d'un seul tenant.

9. Dispositif d'absorption d'énergie selon l'une quelconque des revendications précédentes, dans lequel chaque jambe est formée par flexion à partir d'un ruban unique de matériau.

10. Dispositif d'absorption d'énergie selon l'une quelconque des revendications précédentes, dans lequel chaque jambe est formée à partir d'un ruban unique de matériau.
